# EUROPEAN PATENT SPECIFICATION

(11) **EP 2 464 207 B1**
(45) Date of publication and mention of the grant of the patent: **29.06.2016**
(21) Application number: 10763039.4
(22) Date of filing: 04.08.2010
(51) Int. Cl.: A01B 69/04, A01B 3/64

(54) **AGRICULTURAL FUNICULAR TRACTION SYSTEM WITH ELECTRIC PROPULSION**
LANDWIRTSCHAFTLICHES SEILBAHNBEFÖRDERUNGSSYSTEM MIT ELEKTROANTRIEB
SYSTÈME DE TRACTION FUNICULAIRE AGRICOLE À PROPULSION ÉLECTRIQUE

(30) Priority: 12.08.2009 IT RM20090437
(43) Date of publication of application: 20.06.2012
(73) Proprietor: Zoffoli, Andrea, 00142 Roma (RM) (IT)
(72) Inventor: Zoffoli, Andrea, 00142 Roma (RM) (IT)
(74) Representative: Iannone, Carlo Luigi
(86) International application number: PCT/IT2010/000353
(87) International publication number: WO 2011/018813

(56) References cited:
- WO-A1-95/31759
- FR-A- 520 452
- FR-E- 52 671
- US-A- 1 367 127

## Description

The present invention relates to an agricultural funicular traction system with electric propulsion.

More specifically, the invention concerns a system of the above kind comprising two machines; each one specifically studied and realised so as to permit exploiting at best peculiarities of the technology employing agricultural funicular traction machines.

Funicular traction plowing is known at least since the end of XIX century. An example of this technology, with the features of the preamble of claim 1, can be found in FR 520 452 A.

Observing collateral phenomenons connected with modem agricultural techniques, always more jeopardizing ecosystem of agricultural ground, applicants have understood that application of funicular traction plowing could solve many of the problems connected with the modem agriculture.

Particularly, it has been observed that elements more contributing decaying of ground soil structure are repeated passage on ground with heavy machines, causing compaction of underlying ground structure, destroying bacterial micro fauna, essential to the ground life, modifying its hydrologic features.

As already mentioned, it is known that agricultural tools (such as plows, harrows, seeders, manures, sprayers, ecc.) employed for working ground have been, during a set historical period (from about 1850 to about 1940) operated by funicular traction systems.

The above technology started developing when vapour power has been developed, up to when combustion traction machineries have was available having a sufficient power to move them, also taking into consideration its weight necessary to ensure sufficient adhesion on ground, and at the same time towing the above agricultural tools.

Abandonment of the above technology coincides with growing of wheel power available on modem traction machineries, and with new tyres, by which the latter have been successfully employed, abandoning funicular traction systems.

As to the funicular traction, its main applications have been developed employing vapour propulsion funicular traction machines (also known as "fables").

Some indications are still available of their use in funicular traction systems in Italy since 1890 (Conte Eng. De Asarta at Fraforeano, Barone Traves di Boinfigli, Verona, Doct. Cattadori, Piacenza). In this case, they were spiral systems, i.e. systems with a rope surrounding the field. In other words, old Howard apparatuses have been used, with drum hoist, e.g. manufactured by Violati Tescari at Ariano Polesine that, with a prototype realised during 1913, was present at the Monocoltura contest at Parma.

Next generation employed Fowler technology, based on providing two opposite hoists on headland of ground to be cultivated.

As of 1914, attention of manufacturers was always more based on the latter systems, since they improved mechanical efficiency with respect to the previous generations. An example of said technology is the machine manufactured by Brioschi company on behalf of Imprese Elettriche, Milan, Italy.

Main problem of the above technology is that connected with the type of propulsion, and particularly heavy weight with respect to power available and outer difficulties during displacements.

On the basis of the above, Applicants have realised technical solutions permitting a positive and innovative application of funicular traction plowing technology, exploiting its positive peculiarities.

Main object of the present invention is that of providing a technical solution by introducing electric propulsion in funicular traction plowing, in order to avoid all the above mentioned technical problems.

Other object of the present invention is that of providing a solution permitting satisfying CHG emission required provided by Kyoto 2 protocol, as well as almost total reduction of noise, causing alteration of natural environment equilibrium.

Further object of the present invention is that of providing a solution that can drastically modify traditional earth - man anthropologic relationships, usually based on physical fatigue.

A further object of the present invention is that of providing a solution maintaining the feature of not degrading physical structure of ground during its working by repeated passages over the field of traditional agricultural machines (that are always more powerful, heavy and polluting).

These and other results are obtained according to the present invention with a system according to claim 1.

Always according to the invention four driving and steering wheels are provided.

Particularly, said hoist is provided of an engine and batteries, preferably batteries supplied with power provided by a power line connected to an electric cable and/or solar array set on each machinery, and said jacks for steadiness are electric jacks.

Furthermore, according to the invention, on each machine a tool carrier and reclining work surface, as well as a turret for positioning equipments for the independent and remote automatic driving and/or communication equipments are provided.

Still according to the invention, the system comprises a quick hook and release system for said working tools.

Particularly, said system can comprise at least one of the following tools:
- single or multi furrow reversible plough,
- reversible harrow with springs, spikes or discs,
- reversible mower,
- two-faced sowing machine with automatic loading,
- two-faced manure machine with automatic loading,
- two-faced spraying bar,
- subsoiler or ripper,
- bidirectional roller, Cambridge type or smooth type,
- harvesting head.

Preferably, said means for independent and remote automatic driving allow implementing an automatic driving system that permits the user to:
- set in a safety mode (with stop) in case of breakdowns or anomalies;
- define the working perimeter and the field tilling modes;
- follow the established way with the two machineries;
- keep the same distance between the two machineries;
- slow down or accelerate the work according to the inputs got from optional WSN sensors set on the working tools;
- to make an emergency stop in case of obstacles laying in the way.

Particularly, perimeter of the field to till is materialized in a boundary that can be revealed by a laser scanner (wire netting, fence, boundary wall, hedge, or posts spaced at the same distance apart, too), so that, by a GIS (Geographical Information System) graphic application on a console, the user locates the field perimeter physically materialized, said means for independent and remote automatic driving verifies the material boundary position, revealed by laser scanner and geo-referenced by GPS, agree to inputs (and maps), in case of anomalies (physic boundary is absent or does not agree with maps), the system getting into safe mode, stopping the work and sending an alarm to the console.

According to the invention, said means for independent and remote automatic driving on each machine comprises:
- systems on the two machineries, comprising a processing unit; a communication unit; a GPS receiver; a laser scanner; a camera (optional); and
- a remote control console comprising a control computer, a graphical user interface and a communication unit.

The present invention will be now described, for illustrative, but not limitative purposes, according to its preferred embodiments, with particular reference to the figures of the enclosed drawings, wherein:
figure 1 is a rear perspective view of an embodiment of a (left-handed) machine of the system according to the invention;
figure 2 is an exploded view of a machine (right-handed) of the system according to the invention;
figure 3 shows machine of figures 1 and 2 with a traction rope;

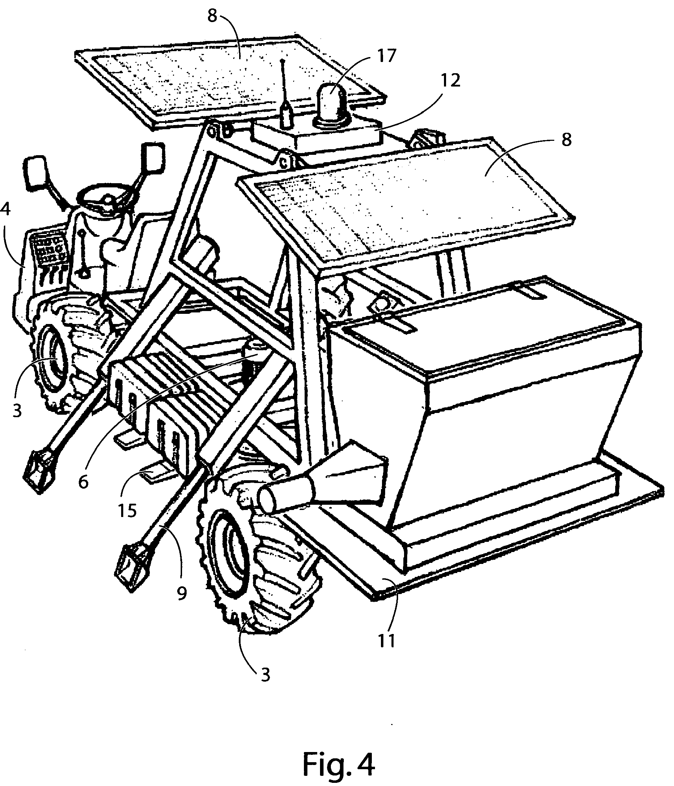

figure 4 shows machine of the system according to the invention with tool carrier and reclining work surface provided with seeds container;
figure 5 shows a first tool (harrow with teeth) for machine of the system according to the invention;
figure 6 shows a second tool (harrow with discs or morgano) for machine of the system according to the invention;
figure 7 shows a third tool (mower) for machine of the system according to the invention;
figure 8 shows a fourth tool (ripper or subsoiler) for machine of the system according to the invention;
figure 9 shows a fifth tool (roll) for machine of the system according to the invention;
figure 10 shows a sixth tool (seeder) for machine of the system according to the invention;
figure 11 shows a seventh tool (manure) for machine of the system according to the invention;

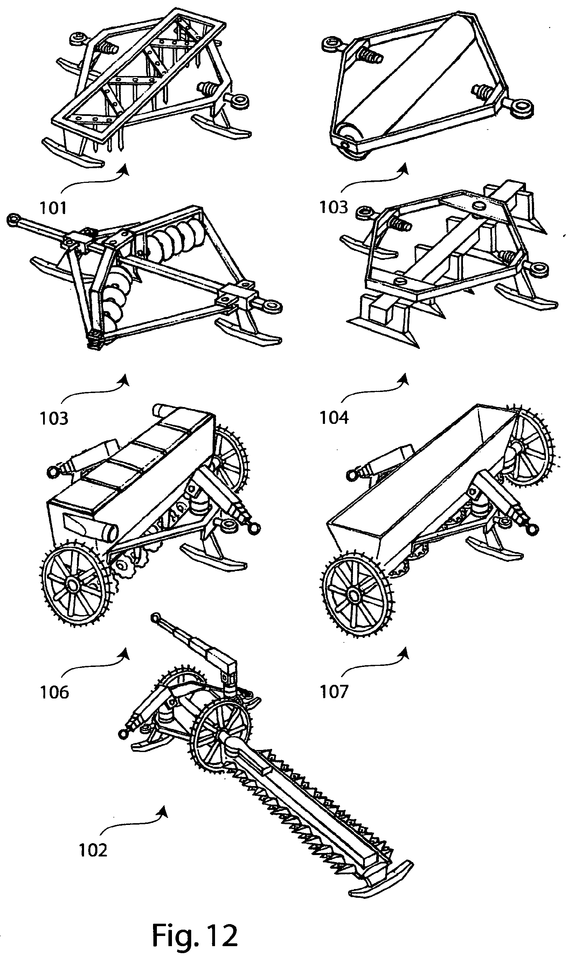

figure 12 shows some tool for machine of the system according to the invention;

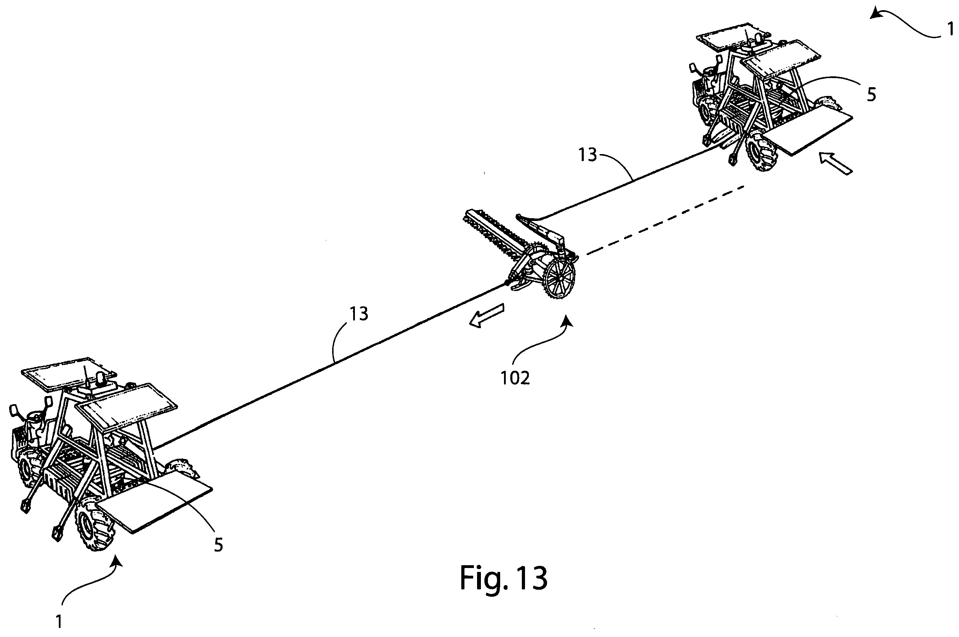

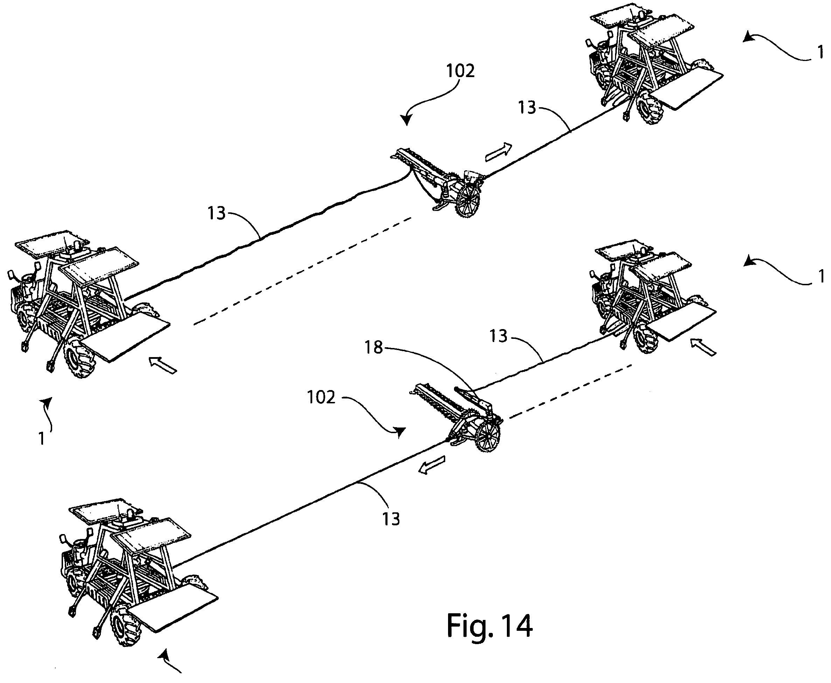

figures 13 and 14 show step1 and step1-step2 working of a machine of system according to the invention;

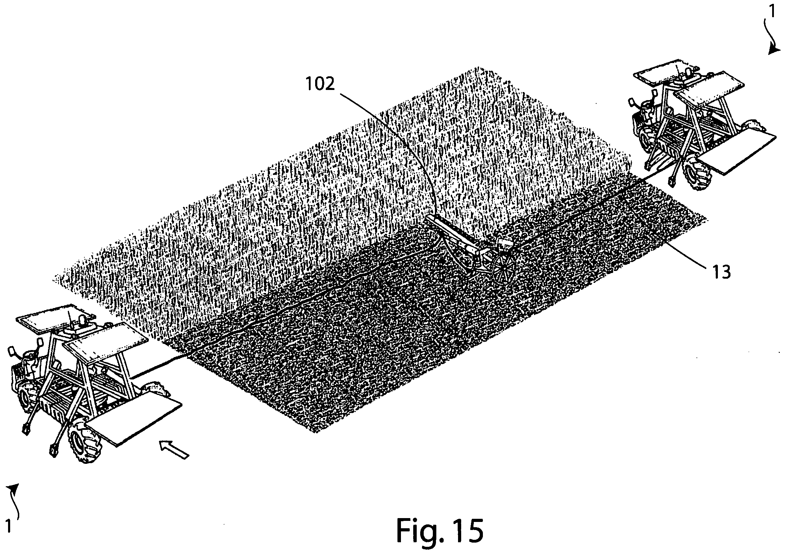

figure 15 shows working of mowing for machine of the system according to the invention;

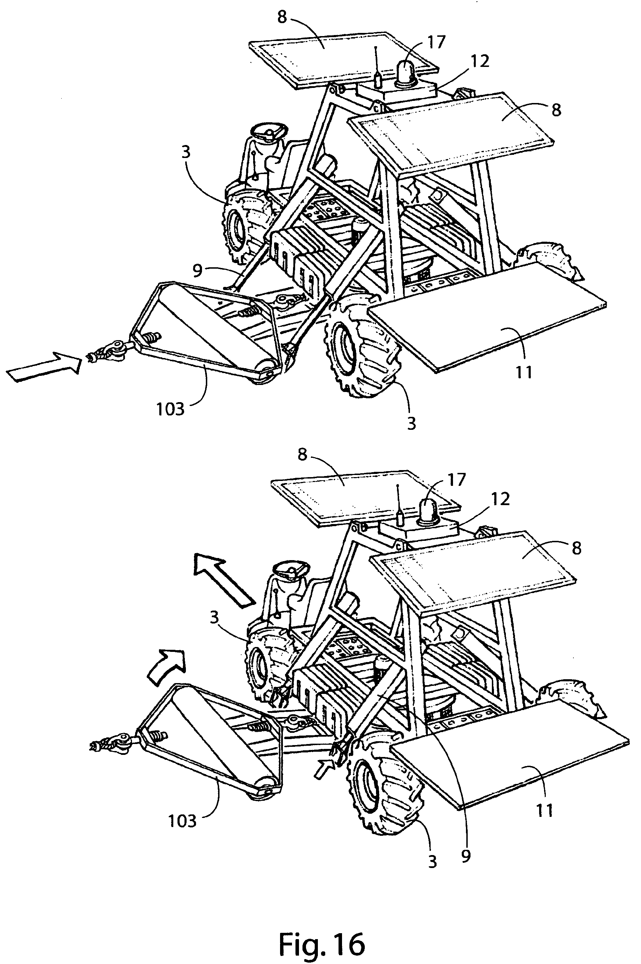

figure 16 shows tool lifting operation for machinery of the system according to the invention;

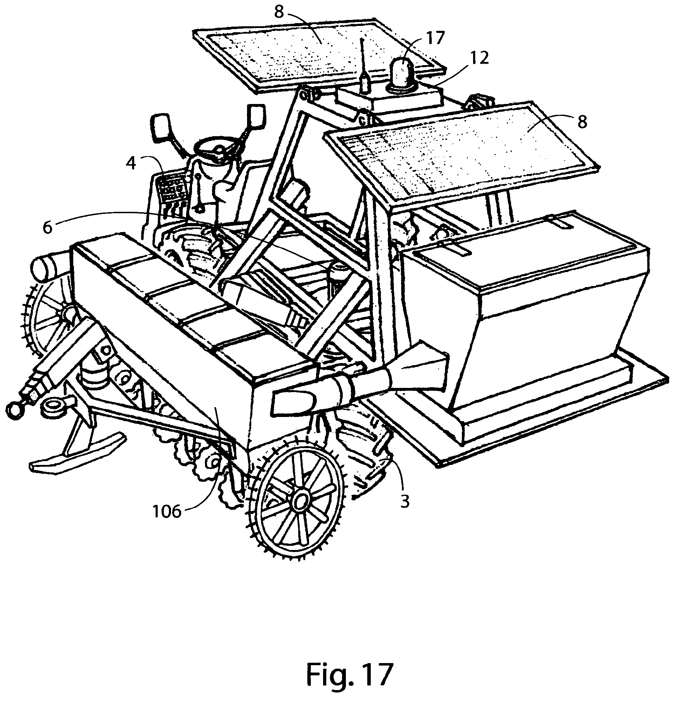

figure 17 shows seed loading operation for machinery of the system according to the invention; and
figure 18 shows detail of cable-laying telescopic arm for machinery of the system according to the invention.

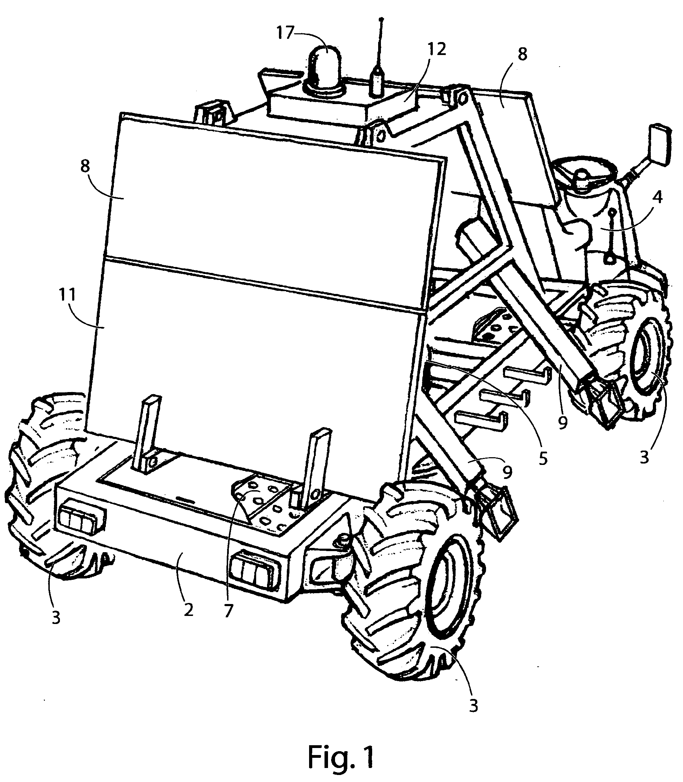

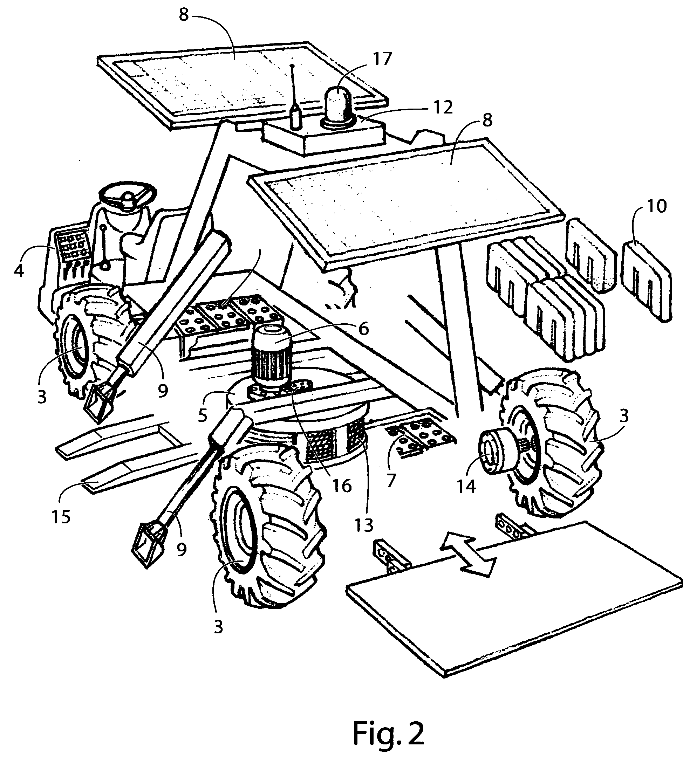

Referring first to figures 1 and 2 of the enclosed drawings, it is shown a machine of the system according to the invention, generically indicated by reference number 1. Obviously, it will be necessary for funicular traction plowing to provide two machines 1 according to the invention, working coupled each other. In any case, for the purposes of the present invention, it will be sufficient describing only one of said machines, since they are perfectly symmetric while operating.

Machine 1 provides a frame 2, provided with four steering driving wheels 3, a driving and reversible control unit 4. A hoist 5 is mounted on said frame 2, said hoist 5 being provided with motor 6 and batteries 7, which, in the solution shown in the drawings, are supplied by energy provided by an electrode connected by an electric cable (not shown), and as auxiliary mode, by solar panels 8, mounted on the machinery. Hoist is provided with a safety clutch 16 preventing breaking cable 13.

Each machine 1 provides stabilization electric jacks 9 (provided on the operation side of machine 1, i.e. toward inside the field to be worked on), and stabilization weights 10 (counterweights). A reclining working surface 11 is provided behind the machine 1. Above, machine 1 provides a turret 12 for positioning equipments for the independent and remote automatic driving and/or communication equipments.

The solution according to the invention provides an electronic unit (inside the driving unit, and thus not visible in the drawings) controlling the operation of machineries and managing driving, operative procedures by an autonomous and remote automatic driving, without the driver and based on algorithms also using Parallel Tracking system.

Machine 1 can also be commuted from automatic driving in manual driving, useful for transferring the same from a field to another one.

In order to obtain the above, driving unit 4 is provided.

Electronic unit provides a sophisticated positioning system, which comprises a satellite, radar and laser system, receiving all the information necessary for managing automatic driving under every condition, avoiding obstacles and ground roughness and managing alignment between machineries and advancement along the field.

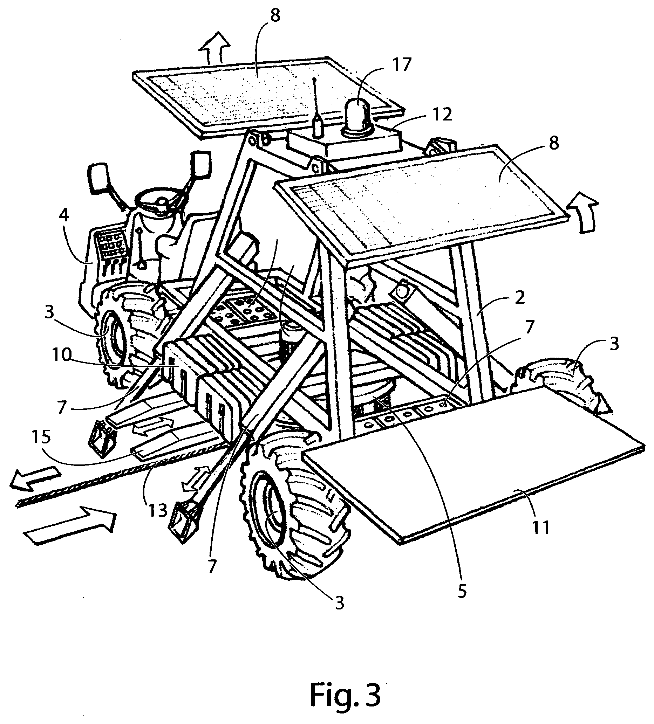

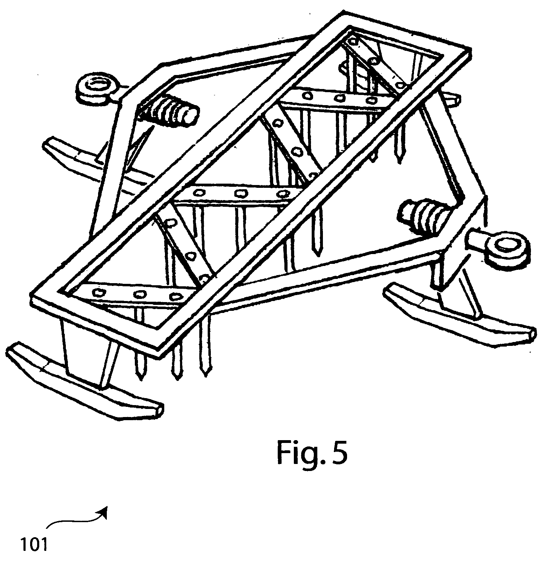

Electronic system further comprises a communication system between machines based on Wi-Fi and optional sensors provided on tools, Wireless Sensor Networks (WSN) aimed to ensure synchronism between the same and preventing working mistaken. Observing now also figure 3, it is also shown cable 13, wound and unwind from hoist 5, and on which ground working tool (not shown in the figure) couples, some type of tools being shown in figures 5 - 11.

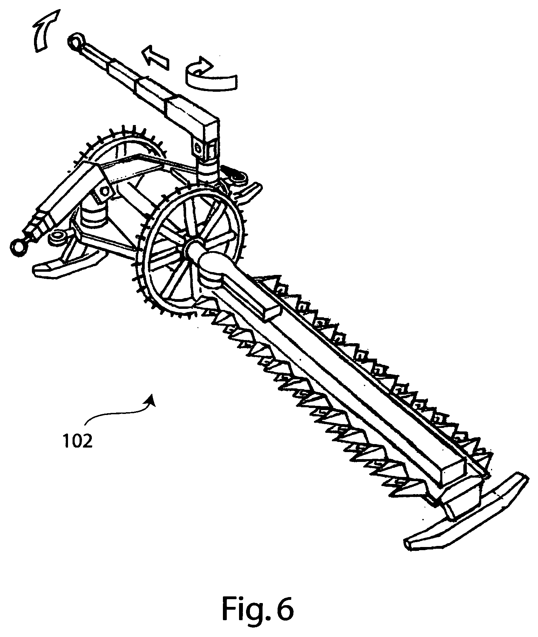

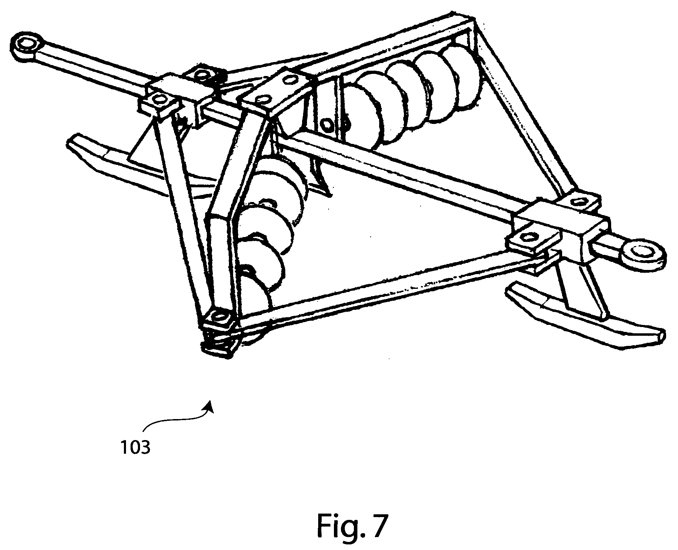

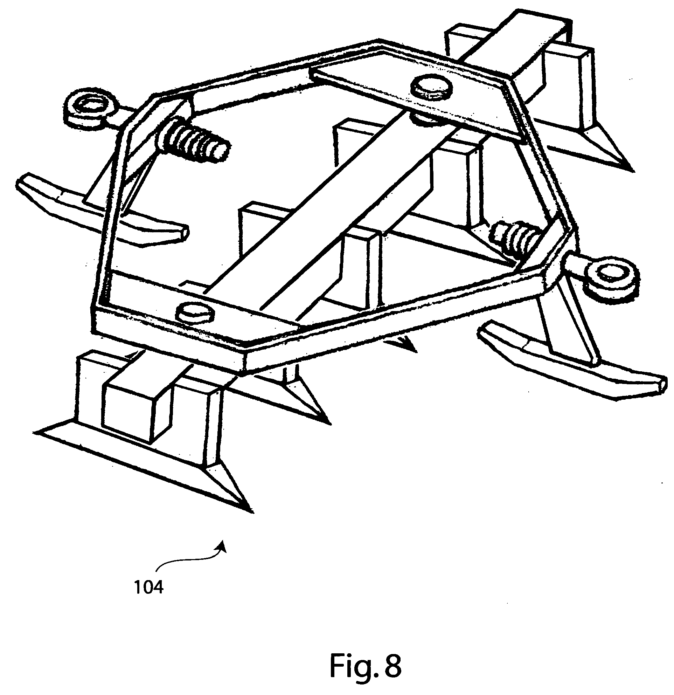

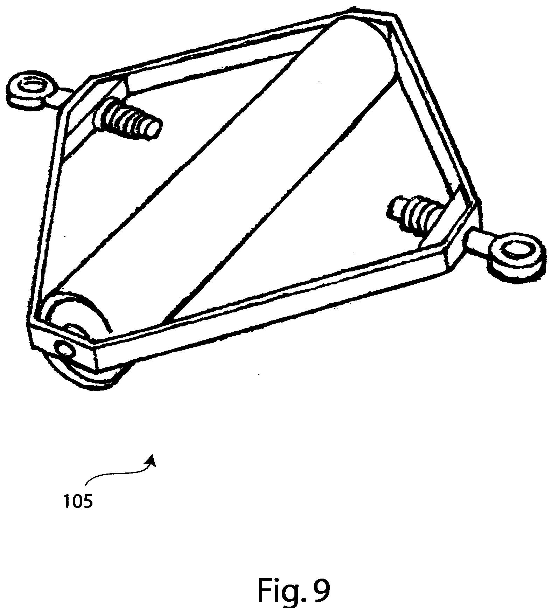

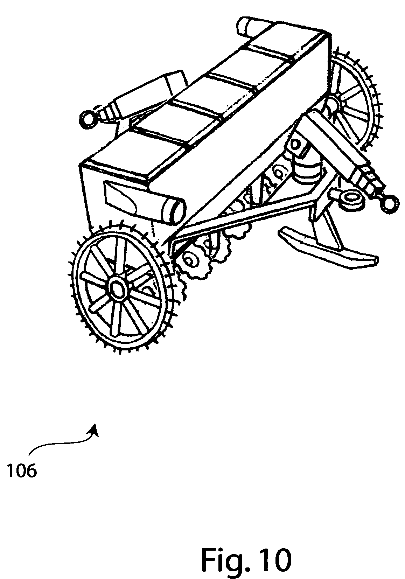

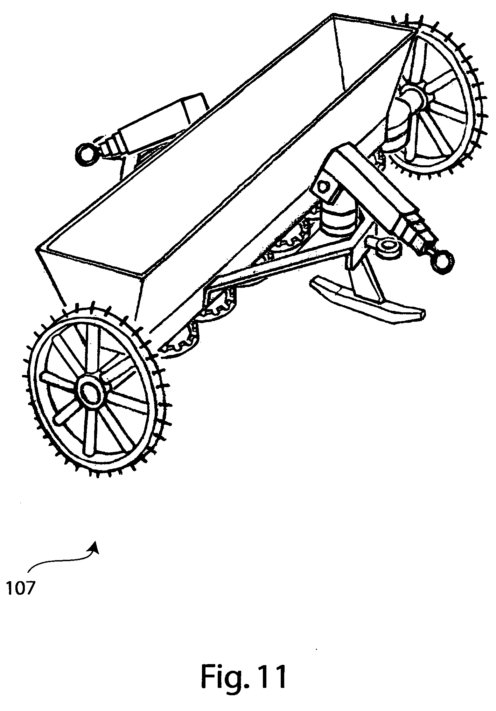

Particularly, figure 5 shows a harrow with spikes 101, figure 6 a harrow with discs 102, figure 7 a mower 103, figure 8 a subsoiler or ripper 104, figure 9 a roller 105, figure 10 a harvesting head 106, and figure 11 a manure machine 107.

As already said, when using the system according to the invention, two machines 1 are placed on opposed sides of a field to be subjected to working (respectively one right-handed machine and one left-handed machine), each one provided with hoist 5, on which one or two metallic cables 13 wind, each cable having a length at least equal to the distance between the two machines. Free ends of cables 13 are fixed to opposite hooks of the working tool (e.g. a harrow with spikes 102 as shown in figure 5).Actuating one of the hoists 5 (active hoist) and leaving the second one in an idle mode (passive hoist), tool 102 will be moved toward machine 1 exerting traction action, thus working the ground (in the present case harrowing) along direction (according to the arrow) between the two machines 1. along direction (according to the arrow) between the two machines 1.

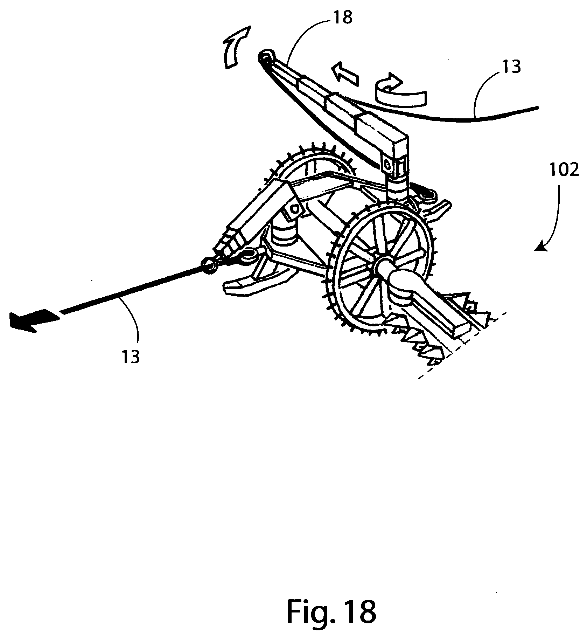

A telescopic arm, shown in figure 18, provided on tool 102, places cable 13 directly according to next active working position (e.g. seeding and manure), in order to permit working even with culture without damaging the same.

Once at the end of its path, tool 102 will be, if necessary, inverted by an inversion mechanism setting the same for working according to the opposite direction, or it will be used in its bi-directional configuration, as for harrow 102.

Now, machines 1 according to the invention, using the electronic positioning system, will move of an active length equivalent to the working width (e.g. plowing width) and actuation of hoists 5 will be inverted: driving (active) machinery 1 will put its hoist 5 in an idle mode (thus becoming passive) and the second one (passive) will actuate its hoist 5 (thus becoming active).

As already said, for every tool advancement direction inversion, machines will advance along lateral headland of a distance equal to the working width.

In order to avoid the need of interrupting working, displacements are alternate, i.e. at the beginning of the every stroke, advancing only machine 1 with the tool moving away and with the hoist 5 idle.

Start of displacement occurs through the electronic control system, the algorithms of which simulate Fowler mechanical system, without using an anchoring point on ground. Commutation and displacement speed are essential to prevent cable friction losses and slipping of the same on ground.

At the end of working of the whole field, tool will be released from cable by pins and cable 13 wind again around hoist 5, thus permitting to the machinery 1 movement for subsequent working.

Electric supply of machines 1 is ensured by a surface electrode (fully or partially permanent or movable) (not shown) at the headings of the field to be subjected to working. Best exploitation of technology suggested is obtained also providing renewable energy sources (e.g. photovoltaic, aeolic or biomass energy), of the farm of close to the farm where the working is carried out.

Machines 1 alternatively are driving machines, connecting the agricultural tool 100 (teeth harrow and/or disc harrow or morgano, seeder, ripper or subsoiler, roll, manure) to the two steel cables 13 operated by electric hoists 5, that can be of the vertical or horizontal axis drum type. Motors 14 of wheels 3, tool lifting slides 15, safety friction 16 and switching lights 17 are shown in the various figures.

The machines 1 according to the invention can further comprise means for independent and remote automatic driving, comprised of hardware and software elements that, while driving means for ground working, must ensure a high safety level and at the same time permitting an easy programming of paths and a proper cover of the surface to be subjected to working.

Means for independent and remote automatic driving must be able to:
- set a safety mode (stop) in case of failure or anomalies;
- permitting to the operator defining working perimeter and ground working modes;
- following set path with the two machines;
- maintaining distance between the two machines;
- slowing down or accelerating working on the basis of inputs received from optional WSN sensors provided on working tools;
- making an emergency stop in case of obstacles along the path.

In order to ensure a safety operation, perimeter of ground to be subjected to working must be created by a limit that can be detected by laser scanners (reticulate, palisade, wall, hedge or even poles at a regular distance each other).

By a GIS (Geographical Information System) graphic application on console, operator individuates on map perimeter of ground.

Means for independent and remote automatic driving verify that position of limit detected by laser scanner, and geo-referenced by GPS, corresponds to instructions (and to the map) received from operator console. If anomalies are detected (lack of physical limit or no correspondence with the map), system enter in a safety mode, interrupting working and sending an alarm to the console.

Means for independent and remote automatic driving on board of each machinery is comprised of:
- on board systems;
- remote control console.

Each one of the two machineries is provided with a system comprising:
- processing unit;
- communication unit;
- GPS receiver;
- laser scanner;
- camera (optional).

Console is provided with:
- control computer;
- Graphic interface;
- communication unit.

Processing unit is comprised of a "safety critical" application computer based on a calculation system with two processors connected by a 2002 architecture.

According to the 2002 paradigm, two processors comprising the processing unit cany out the same functions, comparing intermediate results. In case one of the computers detects a discordance, it would put processing unit in a safety mode making a controlled transaction in a state involving stop for anomaly/failure of the whole system and sending an alarm to the console.

Two machines and console communicate by a safe protocol using a Wi-Fi physical channel for transporting data. Safe protocol ensures:
- integrity of communication. Corrupted data are rejected and transmitted again;
- identity of different units. Three units (two means and console) are univocally associated with a cryptographic key making it impossible both malicious or occasional intrusion of other entities or wrong addressing;
- proper data sequence is ensured associating a serial ID and a "time stamp" to every pack.

In case of lack of communication or in presence of data flow anomalies, driving system software sops the system.

Each one of the two machines is provided with a GPS receiver used to define the working path on ground.

Each one of the two means is provided of a bi-dimensional laser scanner which is used for:
- individuating limits of ground to be subjected to working;
- individuating possible obstacle on ground;
- evaluating the position each other of the two machineries.

Two machines can be provided with a WSN module communicating with on board optional sensors of working tools and receives information suitable to modify and/or adapt working parameters to the climate and ground conditions.

Two machines can be provided with camera, not for driving purposes, but that can be used to visualise ground from operator console.

Console is based on a "Mobile PC" suitable to be used in an open environment (control computer) provided with graphic interface to define working program, i.e.: limiting machineries path (ground perimeter) and defining working path and modes.

By communication unit, console can transmit working program to machineries, verifying position of machines carrying out diagnostic activities, interrupting or modifying working.

Autonomous driving means flowchart:

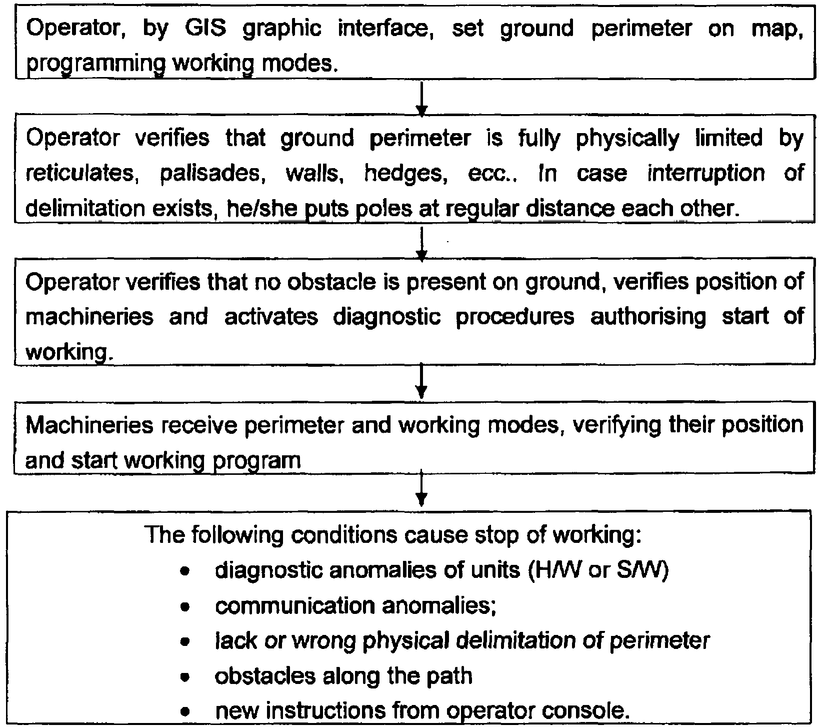

Those in the following are technical-structural particulars of a machines 1 according to the invention, and they are givn only for exemplificative purposes, in order to show how it can be specifically realised a machine according to the invention, but it is to be understood that they cannot be unduly used to limit the scope of the invention.

Particularly, in this exemplificative realisation, it has been used:
- Zinc-plated steel beam frames 2, with the following pitch: 2.50 m, 3.00 m and 3.50 m- width: 1.50 m, 2.00 m and 2.50 m - track: 2.00 m, 2.50 m and 2.70 m- length: 3.50 m, 4.00 m and 4.50 m, with a fixed ballast support of 1t.
- hoist 5 having diameter of: 1.80 m, 2.00 m and 2,20 m, exit from right side or left side according to the working;
- electric jacks 9 necessary to oppose to the hoist traction force;
- toot lifting slides, lifting the working tools, provided on the right or left side, on the basis of the working side;
- tool-bearing surface 11, suitable to support working material (e.g. seeds, fertilizing, solid or liquid manures, ecc.)
- turret for positioning equipments, for autonomous remote automatic driving and communication apparatuses, receiving transceiving antennas of GPS, Radar and Laser systems; further supports antennas and optional Wi-Fi Communication and Wireless Sensor Networks (WSN) systems;
- electronic unit: it processes information received from apparatuses installed on turret and drives the automatic driving guide (lacking the driver) on the basis of the set working programs; it has a keyboard and a monitor for manual driving (when the driver is on board);
- electric motor with three levels of power (40KW, 60KW, 100KW), with power variation transmission for hoist and cable anti-breaking device of the safety friction and advancement variator type, with four wheel drive;
- both axes with iso-diametric steering wheels 3 provided with axial electric motors;
- wheels with 24", 28" and 30" rims;
- steel cable with a diameter of 20 mm, 30 mm and 40 mm, having suitable elasticity and resistance properties;
- working tools:
   ∘ plowing: mono- or poli-plough reversible plow (not shown);
   ∘ harrowing: spring, teeth and/or disc harrow (morgano), that can be adapted to the different kind of ground and agronomic needings, all the tools being reversible tools;
   ∘ subsoiler: ripper or subsoiler;
   ∘ seeding: reversible and rechargeable reversible seeder and manure, with automatic loading of the turnable tool supporting surface of machinery;
   ∘ spraying: reversible sprayer bar, resting on slides (as reversible skis) or on wheels, with nozzle-supporting bars having a variable width supplied by tool supporting surface by tube winding rolls (not shown);
   ∘ rolling: Cambridge type or smooth roll with different width and bi-directional rolling;
   ∘ collection: headings that can be adapted to the different type of products, with or without transportation of the same toward the machinery tool supporting surface.
- safety lighting lights 17, automatically used when working;
- diving seat 4 and autonomous and remote automatic driving console, with steering wheel, braking (service and parking brakes) and variator control; it also houses auxiliary manual controls such as stabilizers, hoist, ecc.
- battery pack 7, with high capacity lithium or hydrogen batteries, with automatic charge supply when under tension;
- photovoltaic generator 8: stand-alone photovoltaic current generator, supplying the battery pack in case of lack of power supply.

Operation of a system according to the invention provided with GIS will be described in the following.

### a. setting of working geographic perimeter

GIS graphic interface permits limiting working limit on the map. The system permits defining limits as a trapezium.

During this phase, it is also defined the traction machinery advancement direction.

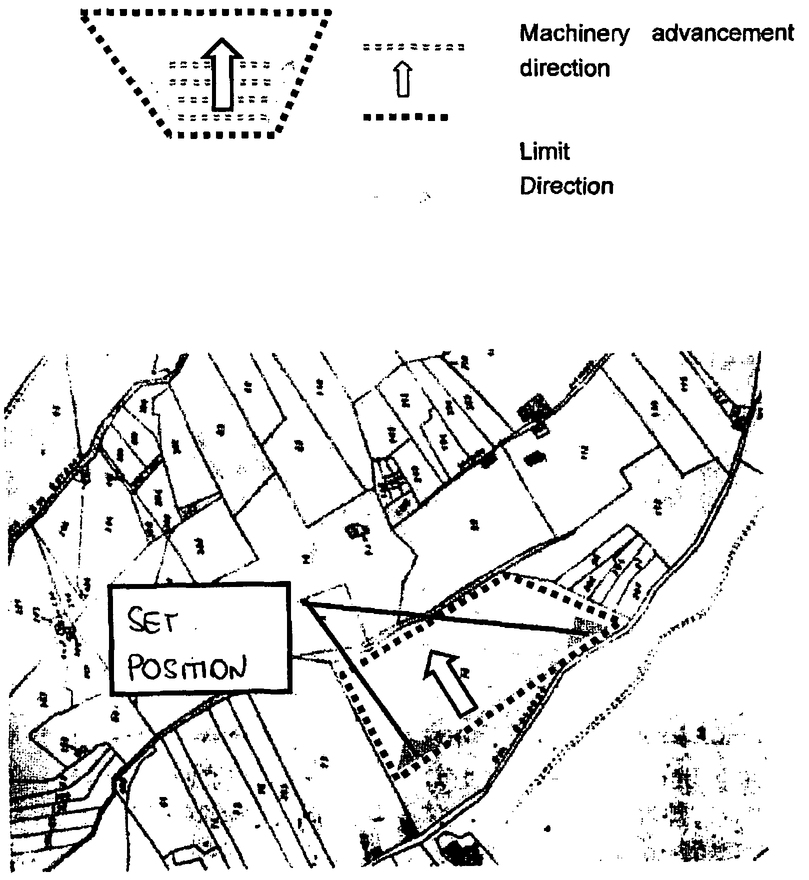

During this step, software controls some geometric parameters, and particularly that distance between the two basis (a and b) is sufficient, and that distance between trapezium sides is sufficient, and then identifies position to start traction machineries.

Then, drive and working autonomous control system is programmed, defining geographic limits of ground to be subjected to working.

Working lines are perpendicular to the advancement direction: traction machineries advance parallel with respect to the trapezium sides, and operator only has to indicate the working direction.

During working, geographic limit is always compared with physical limit detected by telemetric sensors (laser scanner).

### b. delimitation of working physical perimeter

During this phase, operator must verify that geographic perimeter delimitated during step a. Corresponds to physical delimitators provided on ground.

To this end, he/she puts reflecting poles along geographical working perimeter every 2-5 meters.

Poles positioning operation cane be eased by a GPS connected with the same instrument employed to define geographic limit, thus evidencing the operator position on ground directly on interface.

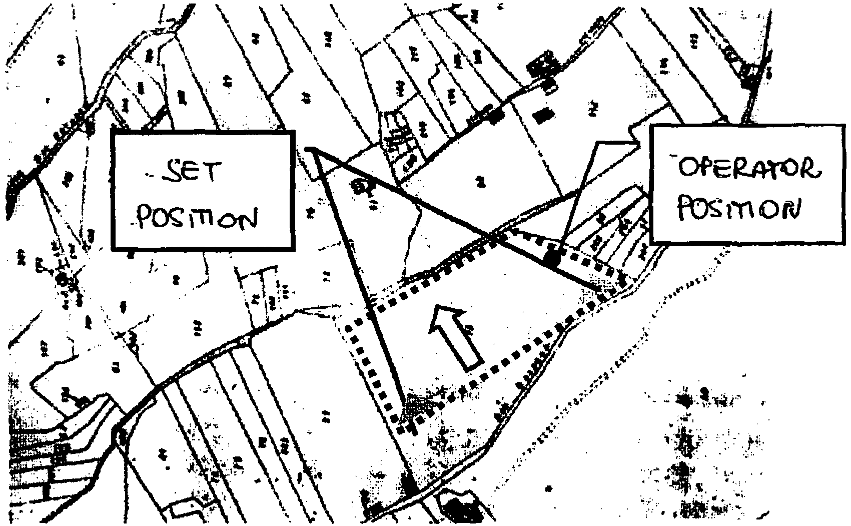

Traction machines will continuously compare physical limit and geographic limit, and every difference will be recorded: a too large difference will immediately cause a stop of working.

### c. working verifications

a. and b. can be carried out only once, and they are valid for every king of working carried out on the same ground.

Working verifications must be carried out before every working step.

During this step, operator must verify that ground is free from obstacles, the physical limits are safer and in good conditions, that ground is suitable to working.

Traction machines are placed as required by working program processed by the system

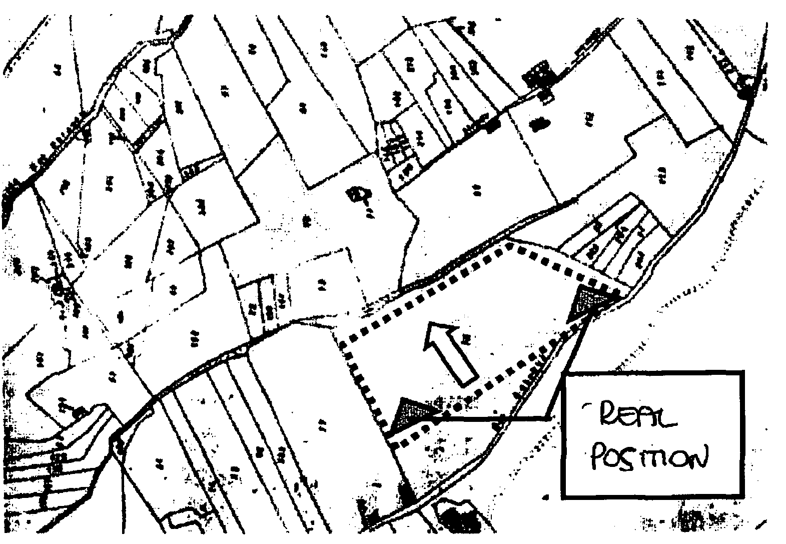

Positioning of traction machines is obtained making the dark triangle (real position of the specific traction machine coinciding with clear triangle (set position of the traction machine start).

If activities are for any reason suspended, traction machines "start set position" will be the position where activities have been suspended and specific traction machine must be positioned in the specific point.

### d. start of working

This phase can be started only when specific traction machine is positioned in the position set for start.

Second traction machine is positioned at the distance provided for the type of working and the suitable tool is mounted on the machinery.

Traction machines verify at start:
- that on board self-diagnostic gives a positive result;
- that position is correct (specific traction machine must be in the position set at start and second traction machine verifies its position with respect to the first one);
- that working physical limit is properly juxtaposed to the set geographic limit.

### e. working

Starting conditions:
field observed from a side to b side;
first tractor on the left of the field with hoist open rightward (lefthand machinery);
second tractor on the right of the field with hoist open leftward (right-hand machinery);
and thus

Step 1) first tractor releases working tool;
Step 2) second tractor puts hoist in a idle mode, i.e. with minimum tension;
Step 3) second tractor releases and lifts its own jacks;
Step 4) second tractor advances of a distance corresponding to a machinery length;
Step 5) second tractor points its own jacks within the ground to have the highest resistance;
Step 6) second tractor drags tool by its own hoist toward itself;
Step 7) second tractor, after having worked the line, lifts the working tool along the guides;
Step 8) second tractor releases working tool;
Step 9) first tractor puts hoist in an idle mode, i.e. with the minimum tension;
Step 10) first tractor releases and lifts its own jacks;
Step 11) first tractor advances of a distance corresponding to a machinery length;
Step 12) first tractor points its own jacks within the ground to have the highest resistance;
Step 13) first tractor drags tool by its own hoist toward itself;
Step 14) first tractor, after having worked the line, lifts the working tool along the guides.

Before every step, radio visibility and lack of obstacles between machineries are further verified and sensors on the tool are interrogated.

During steps 6) and 13), resistance conditions of ground are verified during traction and, if necessary, clutch is used.

The present invention has been described for illustrative and not limitative purposes, according to its preferred embodiments, but it is to be understood that variations and/or modifications can be introduced by those skilled in the art without departing from the relevant scope, as defined in the enclosed claims.

## Claims

1. Agricultural funicular traction system with electric propulsion, said system comprising two agricultural machines, respectively one left-handed machine (1) and one right-handed machine (1), working as a couple, said machines (1) left-handed and right-handed being technically identical, each machine (1) provided with a frame (2), with four wheels (3), a driving and reversible control unit (4), a hoist (5), provided with safety clutch (16), around which a cable (13) winds, jacks (9) for steadiness, on the working side of the machine (1), towards the field to till, and weights (10) for steadiness (counterweights), means for independent and remote automatic driving, the work as a couple of said machines (1) left-handed and right-handed being realized by means of said cable (13) having appropriate elasticity and tensile strength features, that extends, winding and unwinding during the work, between the respective hoists (5) of the two machines (1), on said cable (13) being provided an agricultural tool (100) that moves, at the same time as said cable (13) winds around said hoists (5), between said left-handed and right-handed machines (1), said system being **characterised in that** it is provided, in correspondence of the coupling of the agricultural tool (100) with said cable (13), with a telescopic arm able to lift the cable (13) during the advancement of the machines (1) for the positioning in the next working position.

2. Agricultural funicular traction system with electric propulsion according to claim 1, **characterized in that** four driving and steering wheels (3) are provided.

3. Agricultural funicular traction system with electric propulsion according to one of the previous claims, **characterized in that** said hoist (5) is provided of an engine (6) and batteries (7), preferably batteries supplied with power provided by a power line connected to an electric cable and/or solar array (8) set on each machine (1).

4. Agricultural funicular traction system with electric propulsion according to one of the previous claims, **characterized in that** said jacks (9) for steadiness are electric jacks.

5. Agricultural funicular traction system with electric propulsion according to one of the previous claims, **characterized in that** on each machine (1) a tool carrier and reclining work surface (11) is provided.

6. Agricultural funicular traction system with electric propulsion according to one of the previous claims, **characterized in that** each machine (1) is provided with a turret for positioning equipments for the independent and remote automatic driving and/or communication equipments (12).

7. Agricultural funicular traction system with electric propulsion according to one of the previous claims, **characterized in that** it comprises a quick-release coupling system for said working tool.

8. Agricultural funicular traction system with electric propulsion according to one of the previous claims, **characterized in** comprising at least one of the following tools: - single or multi furrow reversible plough, - reversible harrow with springs, spikes (101) or discs (102), - reversible mower (103), - two-sided sowing machine (106) with automatic loading, - two-sided manure machine (107) with automatic loading, - two-sided spraying bar, - subsoiler or ripper (104), - bidirectional roller (105), Cambridge type or smooth type, - harvesting head.

9. Agricultural funicular traction system with electric propulsion according to one of the previous claims, **characterized in that** said means for independent and remote automatic driving allow implementing an automatic driving system that permits the user to: - set in a safety mode (with stop) in case of breakdowns or anomalies; - define the working perimeter and the field tilling modes; - follow a pre-established path with the two machineries (1); - keep the same distance between the two machineries (1); - slow down or accelerate the work according to the inputs got from optional WSN sensors set on the working tools; - make an emergency stop in case of obstacles laying in the way.

10. Agricultural funicular traction system with electric propulsion according to claim 9, **characterized in that** the perimeter of the field to till is materialized in a boundary that can be revealed by a laser scanner (wire netting, fence, boundary wall, hedge, or posts spaced at the same distance apart, too), so that, by a GIS (Geographical Information System) graphic application on a console, the user locates the field perimeter physically materialized.

11. Agricultural funicular traction system with electric propulsion according to claim 9 or 10, **characterized in that** said means for independent and remote automatic driving verifies that the position of the boundary, revealed by laser scanner and geo-referenced by GPS, corresponds to the inputs (and maps), and in case of anomalies (physic boundary is absent or does not agree with maps), the system gets into a safe mode, stopping the work and sending an alarm to the console.

12. Agricultural funicular traction system with electric propulsion according to claim 9 or 10 or 11, **characterized in that** said means for independent and remote automatic driving on each machine (1) comprises: - systems on the two machines (1), comprising a processing unit; a communication unit; a GPS receiver; a laser scanner and optionally a camera; and - a remote control console comprising a control computer, a graphical user interface and a communication unlit.

13. Agricultural funicular traction system with electric propulsion according to one of the preceding claims 9 -12, **characterized in that** the means for remote automatic are provided with a software, said software executing the following steps: a. setting working geographic perimeter; b. delimiting the working physical perimeter; c. verifications for working; d. starting working; e. working.

14. Agricultural funicular traction system with electric propulsion according to claim 13, **characterized in that** during said working step (e.), the following steps are executed:
- starting conditions:
field observed from a side to b side;
first tractor on the left of the field with hoist open rightward (left-hand machine);
second tractor on the right of the field with hoist open leftward (right-hand machine);
and thus
Step 1) first tractor releases working tool;
Step 2) second tractor puts hoist in a idle mode, i.e. with minimum tension;
Step 3) second tractor releases and lifts its own jacks;
Step 4) second tractor advances of a distance corresponding to a machinery length;
Step 5) second tractor points its own jacks within the ground to have the highest resistance;
Step 6) second tractor drags tool by its own hoist toward itself;
Step 7) second tractor, after having worked the line, lifts the working tool along the guides;
Step 8) second tractor releases working tool;
Step 9) first tractor puts hoist in an idle mode, i.e. with the minimum tension;
Step 10) first tractor releases and lifts its own jacks;
Step 11) first tractor advances of a distance corresponding to a machine length;
Step 12) first tractor points its own jacks within the ground to have the highest resistance;
Step 13) first tractor drags tool by its own hoist toward itself;
Step 14) first tractor, after having worked the line, lifts the working tool along the guides.

## Patentansprüche

1. Landwirtschaftliches Seilbahnbeförderungssystem mit Elektroantrieb, wobei das System jeweils zwei landwirtschaftliche Maschinen umfasst, entsprechend eine linksgängige Maschine (1) und eine rechtsgängige Maschine (1), die als Paar arbeiten, wobei die linksgängige und die rechtsgängige Maschine (1) technisch identisch sind, wobei jede Maschine (1) ausgestattet ist mit einem Rahmen (2), mit vier Rädern (3), einer Antriebs- und Umkehrbar-Steuereinheit (4), einer Winde (5), die mit einer Sicherheitskupplung (16) ausgerüstet ist und um die ein Seil (13) gewickelt ist, Stützen (9) für die Standfestigkeit auf der Arbeitsseite der Maschine (1) in Richtung des zu bestellenden Feldes und Gewichte (10) für die Standfestigkeit (Gegengewichte), Mittel zum unabhängigen und ferngesteuerten automatischen Antreiben, wobei die Arbeit als ein Paar der linksgängigen und der rechtsgängigen Maschine (1) mittels des Seils (13) ausgeführt wird, das geeignete Elastizitäts- und Zugfestigkeitseigenschaften aufweist, während der Arbeit auf- und abgewickelt wird und sich zwischen den jeweiligen Winden (5) der beiden Maschinen (1) erstreckt, wobei an dem Seil (13) ein landwirtschaftliches Gerät (100) vorgesehen ist, das sich zur gleichen Zeit zwischen der linksgängigen und der rechtsgängigen Maschine (1) bewegt, während das Seil (13) auf die Winden (5) gewickelt wird, wobei das System **dadurch gekennzeichnet ist, dass** es in Entsprechung mit der Kopplung des landwirtschaftlichen Geräts (100) mit dem Seil (13) mit einem Teleskoparm ausstattet ist, der fähig ist, das Seil (13) während der Vorwärtsbewegung der Maschinen (1) zur Positionierung in der nächsten Arbeitsposition anzuheben.

2. Landwirtschaftliches Seilbahnbeförderungssystem mit Elektroantrieb nach Anspruch 1, **dadurch gekennzeichnet, dass** vier antreibende und lenkende Räder (3) vorgesehen sind.

3. Landwirtschaftliches Seilbahnbeförderungssystem mit Elektroantrieb nach einem der vorhergehenden Ansprüche, **dadurch gekennzeichnet, dass** die Winde (5) mit einem Motor (6) und Batterien (7) ausgerüstet ist, wobei die Batterien vorzugsweise mit Strom versorgt werden, der über eine Stromleitung zugeführt wird, die mit einem elektrischen Kabel und/oder einer Solaranordnung (8) verbunden ist, die auf jeder Maschine (1) angeordnet ist.

4. Landwirtschaftliches Seilbahnbeförderungssystem mit Elektroantrieb nach einem der vorhergehenden Ansprüche, **dadurch gekennzeichnet, dass** die Stützen (9) für die Standfestigkeit elektrische Stützen sind.

5. Landwirtschaftliches Seilbahnbeförderungssystem mit Elektroantrieb nach einem der vorhergehenden Ansprüche, **dadurch gekennzeichnet, dass** auf jeder Maschine (1) ein Geräteträger und eine verstellbare Arbeitsfläche (11) vorgesehen sind.

6. Landwirtschaftliches Seilbahnbeförderungssystem mit Elektroantrieb nach einem der vorhergehenden Ansprüche, **dadurch gekennzeichnet, dass** jede Maschine (1) mit einem Drehkopf zur Positionierung von Ausrüstungen für das unabhängige und ferngesteuerte automatische Antreiben und/oder Kommunikations-Ausrüstungen (12) ausgestattet ist.

7. Landwirtschaftliches Seilbahnbeförderungssystem mit Elektroantrieb nach einem der vorhergehenden Ansprüche, **dadurch gekennzeichnet, dass** es ein Schnellkupplungssystem für die Arbeitsgeräte umfasst.

8. Landwirtschaftliches Seilbahnbeförderungssystem mit Elektroantrieb nach einem der vorhergehenden Ansprüche, **dadurch gekennzeichnet, dass** es mindestens eines der folgenden Geräte umfasst: - einen Drehpflug für eine oder mehrere Furchen, - eine umkehrbare Egge mit Federn, Zinken (101) oder Scheiben (102), - einen umkehrbaren Mäher (103), - eine zweiseitige Sämaschine (106) mit automatischer Beschickung, - eine zweiseitige Güllemaschine (107) mit automatischer Beschickung, - eine zweiseitige Spritzleiste, - einen Tieflockerer oder Rechen (104), - eine bidirektionale Rolle (105) vom Typ Cambridge oder glatt, - einen Erntekopf.

9. Landwirtschaftliches Seilbahnbeförderungssystem mit Elektroantrieb nach einem der vorhergehenden Ansprüche, **dadurch gekennzeichnet, dass** die Mittel zum unabhängigen und ferngesteuerten automatischen Antreiben die Implementierung eines automatischen Antriebssystems ermöglichen, das dem Benutzer ermöglicht: - Einstellen eines Sicherheitsmodus (mit Stoppfunktion) im Fall von Betriebsstörungen oder Anomalien; - Definieren des Arbeitsumfangs und der Feldbestellungsarten; - Folgen eines vorbestimmten Pfades mit den beiden Maschinen (1); - Aufrechterhalten des gleichen Abstands zwischen den beiden Maschinen (1); - Verlangsamen oder Beschleunigen der Arbeit gemäß den Eingaben von optionalen WSN-Sensoren, die an den Arbeitsgeräten eingestellt werden; - Durchführen eines Nothalts bei im Weg liegenden Hindernissen.

10. Landwirtschaftliches Seilbeförderungssystem mit Elektroantrieb nach Anspruch 9, **dadurch gekennzeichnet, dass** der Umfang des zu bestellenden Feldes durch eine Grenze gegeben ist, die mit einem Laserscanner angezeigt werden kann (Drahtgeflecht, Zaun, Grenzwand, Hecke oder Pfosten, die im gleichen Abstand voneinander aufgestellt sind), so dass der Benutzer mit Hilfe einer grafischen GIS-Anwendung (Geographisches Informationssystem) auf einer Konsole den Umfang des Feldes physisch materialisiert.

11. Landwirtschaftliches Seilbeförderungssystem mit Elektroantrieb nach Anspruch 9 oder 10, **dadurch gekennzeichnet, dass** das Mittel zum unabhängigen und ferngesteuerten automatischen Antreiben überprüft, ob die Position der Grenze, die durch den Laserscanner angezeigt und durch GPS georeferenziert wird, den Eingaben (und Karten) entspricht, wobei das System im Fall von Anomalien (physische Grenze fehlt oder stimmt nicht mit den Karten überein) in einen sicheren Modus übergeht, die Arbeit unterbricht und einen Alarm zur Konsole sendet.

12. Landwirtschaftliches Seilbeförderungssystem mit Elektroantrieb nach Anspruch 9, 10 oder 11, **dadurch gekennzeichnet, dass** das Mittel zum unabhängigen und ferngesteuerten automatischen Antreiben auf jeder Maschine (1) umfasst:
- Systeme auf den zwei Maschinen (1), die eine Verarbeitungseinheit; eine Kommunikationseinheit; einen GPS-Empfänger; einen Laserscanner und optional eine Kamera umfassen; und - eine Fernsteuerkonsole, die einen Steuercomputer, eine graphische Benutzerschnittstelle und eine Kommunikationseinheit umfasst.

13. Landwirtschaftliches Seilbeförderungssystem mit Elektroantrieb nach einem der vorhergehenden Ansprüche 9 bis 12, **dadurch gekennzeichnet, dass** die Mittel zur automatischen Fernsteuerung mit einer Software versehen sind, wobei die Software folgende Schritte ausführt: a. Einstellen des geographischen Arbeitsumfangs; b. Begrenzen des physischen Arbeitsumfangs; c. Überprüfungen für die Arbeiten; d. Beginnen der Arbeit; e. Arbeiten.

14. Landwirtschaftliches Seilbeförderungssystem mit Elektroantrieb nach Anspruch 13, **dadurch gekennzeichnet, dass** während des Arbeitsschritts (e.) folgende Schritte ausgeführt werden:
- Starten Bedingungen:
- Beobachten des Feldes von Seite a zu Seite b;
der erste Traktor auf der linken Seite des Feldes hat seine Winde nach rechts geöffnet (linksgängige Maschine);
der zweite Traktor auf der rechten Seite des Feldes hat seine Winde nach links geöffnet (rechtsgängige Maschine);
wodurch
Schritt 1) der erste Traktor das Arbeitsgerät freigibt;
Schritt 2) der zweite Traktor die Winde in einen Leerlaufzustand versetzt, d. h. mit minimaler Spannung;
Schritt 3) der zweite Traktor seine eigenen Stützen freigibt und anhebt;
Schritt 4) der zweite Traktor eine Strecke vorwärts fährt, die einer Maschinenlänge entspricht;
Schritt 5) der zweite Traktor seine eigenen Stützen auf dem Boden abstützt, um den höchsten Widerstand zu erreichen;
Schritt 6) der zweite Traktor das Gerät mit seiner eigenen Winde zu sich selbst zieht;
Schritt 7) der zweite Traktor das Arbeitsgerät entlang der Führungen anhebt, nachdem er die Bahn bearbeitet hat;
Schritt 8) der zweite Traktor das Arbeitsgerät freigibt;
Schritt 9) der erste Traktor die Winde in einen Leerlaufzustand versetzt, d. h. mit minimaler Spannung;
Schritt 10) der erste Traktor seine eigenen Stützen freigibt und anhebt;
Schritt 11) der erste Traktor eine Strecke vorwärts fährt, die einer Maschinenlänge entspricht;
Schritt 12) der erste Traktor seine eigenen Stützen auf dem Boden abstützt, um den höchsten Widerstand zu erreichen;
Schritt 13) der erste Traktor das Gerät mit seiner eigenen Winde zu sich selbst zieht;
Schritt 14) der erste Traktor das Arbeitsgerät entlang der Führungen anhebt, nachdem er die Bahn bearbeitet hat.

## Revendications

1. Système de traction funiculaire agricole à propulsion électrique, ledit système comprenant deux machines agricoles, à savoir, respectivement, une machine gauche (1) et une machine droite (1), travaillant en couple, lesdites machines (1) gauche et droite étant techniquement identiques, chaque machine (1) étant munie d'un châssis (2) avec quatre roues (3), d'une unité de conduite et de commande réversible (4), d'un treuil (5), muni d'un embrayage de sécurité (16), autour duquel s'enroule un câble (13), de vérins (9) pour la stabilité, sur le côté de travail de la machine (1), vers le champ devant être labouré, et de poids (10) pour la stabilité (contrepoids), de moyens pour la conduite automatique indépendante et à distance, le travail en couple desdites machines (1) gauche et droite étant effectué à l'aide dudit câble (13), ayant des caractéristiques d'élasticité et de résistance à la traction appropriées, qui s'étend, s'enroulant et se déroulant durant le travail, entre les treuils respectifs (5) des deux machines (1), un outil agricole (100) étant disposé sur ledit câble (13), celui-ci se déplaçant en même temps que ledit câble (13) s'enroule autour desdits treuils (5), entre lesdites machines gauche et droite (1), ledit système étant **caractérisé en ce qu'**il est muni, en correspondance avec le couplage de l'outil agricole (100) audit câble (13), d'un bras télescopique susceptible de soulever le câble (13) durant l'avance des machines (1) pour le positionnement dans la position de travail suivante.

2. Système de traction funiculaire agricole à propulsion électrique selon la revendication 1, **caractérisé en ce que** quatre roues (3) motrices et directrices sont disposées.

3. Système de traction funiculaire agricole à propulsion électrique selon l'une des revendications précédentes, **caractérisé en ce que** ledit treuil (5) est muni d'un moteur (6) et de batteries (7), de préférence des batteries alimentées par une énergie délivrée par une ligne d'alimentation connectée à un câble électrique et/ou à un groupement solaire (8) disposé sur chaque machine (1).

4. Système de traction funiculaire agricole à propulsion électrique selon l'une des revendications précédentes, **caractérisé en ce que** lesdits vérins (9) pour la stabilité sont des vérins électriques.

5. Système de traction funiculaire agricole à propulsion électrique selon l'une des revendications précédentes, **caractérisé en ce que**, sur chaque machine (1), une surface de travail inclinable et de support d'outil (11) est disposée.

6. Système de traction funiculaire agricole à propulsion électrique selon l'une des revendications précédentes, **caractérisé en ce que** chaque machine (1) est munie d'une tourelle pour positionner des équipements pour la conduite automatique indépendante et à distance et/ou des équipements de communication (12).

7. Système de traction funiculaire agricole à propulsion électrique selon l'une des revendications précédentes, **caractérisé en ce qu'**il comprend un système de couplage à libération rapide pour lesdits outils de travail.

8. Système de traction funiculaire agricole à propulsion électrique selon l'une des revendications précédentes, **caractérisé en ce qu'**il comprend au moins l'un des outils suivants : - une charrue réversible à sillons multiples ou unique, - une herse réversible avec des ressorts, des pointes (101) ou des disques (102), - une faucheuse réversible (103), - une machine à semer à double sens (106) à chargement automatique, - une machine à engrais à double sens (107) à chargement automatique, - une barre de pulvérisation à double sens, - un scarificateur ou une défonceuse (104), - un rouleau bidirectionnel (105), du type ondulé ou du type lisse, - une tête de moissonnage.

9. Système de traction funiculaire agricole à propulsion électrique selon l'une des revendications précédentes, **caractérisé en ce que** lesdits moyens pour la conduite automatique indépendante et à distance permettent de mettre en oeuvre un système de conduite automatique qui permet à l'utilisateur de : - établir un mode de sécurité (avec arrêt) dans des cas de pannes ou d'anomalies ; - définir le périmètre de travail et les mode de labourage de champ ; - suivre un trajet pré-établi avec les deux machines (1) ; - maintenir la même distance entre les deux machines (1) ; - ralentir ou accélérer le travail en fonction des entrées obtenues à partir de capteurs WSN optionnels disposés sur les outils de travail ; - effectuer un arrêt d'urgence dans le cas d'obstacles se trouvant dans le chemin.

10. Système de traction funiculaire agricole à propulsion électrique selon la revendication 9, **caractérisé en ce que** le périmètre du champ devant être labouré est matérialisé par une limite qui peut être révélée par un dispositif de balayage à laser (grille de fil métallique, barrière, paroi de délimitation, haie, ou, également, poteaux espacés les uns des autres à égale distance), de telle sorte que, à l'aide d'une application graphique SIG (système d'information géographique) sur une console, l'utilisateur localise le périmètre du champ matérialisé physiquement.

11. Système de traction funiculaire agricole à propulsion électrique selon la revendication 9 ou 10, **caractérisé en ce que** lesdits moyens pour la conduite automatique indépendante et à distance vérifient que la position de la limite, montrée par un dispositif de balayage à laser et géo-référencée par un système de localisation sur le globe (GPS), correspond aux entrées (et aux cartes), et, dans le cas d'anomalies (une limite physique est absente ou ne correspond pas aux cartes), le système rentre dans un mode sûr, arrêtant le travail et envoyant une alarme à la console.

12. Système de traction funiculaire agricole à propulsion électrique selon la revendication 9 ou 10 ou 11, **caractérisé en ce que** lesdits moyens pour la conduite automatique indépendante et à distance sur chaque machine (1) comprennent : - des systèmes sur les deux machines (1), comprenant une unité de traitement ; une unité de communication ; un récepteur de système de localisation sur le globe (GPS) ; un dispositif de balayage à laser, et de façon optionnelle, une caméra ; et - une console de commande à distance comprenant un ordinateur de commande, une interface d'utilisateur graphique et une unité de communication.

13. Système de traction funiculaire agricole à propulsion électrique selon l'une des revendications 9 à 12 qui précèdent, **caractérisé en ce que** les moyens d'automatique à distance sont munis d'un logiciel, ledit logiciel exécutant les étapes suivantes : a. établissement d'un périmètre géographique de travail ; b. délimitation du périmètre physique de travail ; c. des vérifications pour le travail ; d. démarrage du travail ; e. travail.

14. Système de traction funiculaire agricole à propulsion électrique selon la revendication 13, **caractérisé en ce que**, durant ladite étape de travail (e.), les étapes suivantes sont exécutées :
- conditions de démarrage :
champ observé d'un côté a à un côté b ;
premier tracteur sur la gauche du champ avec le treuil ouvert vers la droite (machine gauche) ;
deuxième tracteur sur la droite du champ avec le treuil ouvert vers la gauche (machine droite) ;
et ainsi
étape 1) le premier tracteur libère l'outil de travail ;
étape 2) le deuxième tracteur met le treuil dans un mode au repos, c'est-à-dire avec une tension minimale ;
étape 3) le deuxième tracteur libère et soulève ses propres vérins ;
étape 4) le deuxième tracteur avance d'une distance correspondant à une longueur de machine ;
étape 5) le deuxième tracteur pointe ses propres vérins dans le sol de façon à avoir la résistance la plus élevée ;
étape 6) le deuxième tracteur tire l'outil vers lui à l'aide de son propre treuil ;
étape 7) le deuxième tracteur, après avoir travaillé le long de la ligne, soulève l'outil de travail le long des guides ;
étape 8) le deuxième tracteur libère l'outil de travail ;
étape 9) le premier tracteur met le treuil dans un mode au repos, c'est-à-dire avec la tension minimale ;
étape 10) le premier tracteur libère et soulève ses propres vérins ;
étape 11) le premier tracteur avance d'une distance correspondant à une longueur de machine ;
étape 12) le premier tracteur pointe ses propres vérins dans le sol de façon à avoir la résistance la plus élevée ;
étape 13) le premier tracteur tire l'outil vers lui à l'aide de son propre treuil ;
étape 14) le premier tracteur, après avoir travaillé le long de la ligne, soulève l'outil de travail le long des guides.
